# FASCICULE DE BREVET EUROPEEN

(11) **EP 1 144 956 B1**
(45) Date de publication et mention de la délivrance du brevet: **26.10.2005**
(21) Numéro de dépôt: 99958333.9
(22) Date de dépôt: 15.12.1999
(51) Int. Cl.: G01D 3/024, G01D 18/00, G08B 29/06

(54) **DISPOSITIF D'ACQUISITION D'ETATS LOGIQUES DE MULTIPLES CAPTEURS**
VORRICHTUNG ZUR GEWINNUNG VON GEBERSTELLUNGEN
DEVICE FOR ACQUIRING LOGIC STATES OF MULTIPLE SENSORS

(30) Priorité: 18.12.1998 FR 9816023
(43) Date de publication de la demande: 17.10.2001
(73) Titulaire: THALES AVIONICS S.A., 78141 Vélizy Villacoublay Cédex (FR)
(72) Inventeur: CONI, Ph., Thomson-CSF Prop. Int., Dépt. Brevets, 94117 Arcueil Cedex (FR); MARTINEZ, M. Thomson-CSF Prop. Int., Dépt. Brevets, 94117 Arcueil Cedex (FR); BESNIER, Ph. Thomson-CSF Prop. Int., Dépt. Brevets, 94117 Arcueil Cedex (FR); MOREAU, P. Thomson-CSF Prop. Int., Dépt. Brevets, 94117 Arcueil Cedex (FR)
(74) Mandataire: Guérin, Michel
(86) Numéro de dépôt international: PCT/FR1999/003148
(87) Numéro de publication internationale: WO 2000/037893

(56) Documents cités:
- EP-A- 0 572 204
- DD-A- 279 090
- DE-A- 3 128 811

## Description

L'invention concerne un dispositif d'acquisition d'états logiques de multiples capteurs fonctionnant en tout ou rien.

L'application principale, mais non exclusive, de l'invention est la détection de dysfonctionnements dans toutes les parties d'un aéronef et l'indication de ces dysfonctionnements à un endroit visible par le pilote de l'aéronef.

Classiquement, on avait l'habitude de relier un capteur fonctionnant en tout ou rien, c'est-à-dire en pratique un interrupteur électrique, à un voyant lumineux dont la couleur par exemple rouge, orange ou verte représentait le niveau de gravité du dysfonctionnement.

Avec la croissance de la complexité de fonctionnement des aéronefs, il devient nécessaire de disposer de plusieurs dizaines de voyants d'alarme et on a souhaité remplacer tous ces voyants par une seule console de visualisation affichant sur un écran une indication sur la nature du dysfonctionnement seulement lorsqu'un dysfonctionnement est constaté. La couleur de l'affichage correspond encore au niveau de gravité du dysfonctionnement.

Il est souhaitable que cette console soit utilisable dans toutes sortes d'aéronefs et elle doit donc pouvoir s'adapter à différents nombres et différents types de capteurs de dysfonctionnements.

Les capteurs étant des interrupteurs (détecteur d'ouverture de porte, détecteur de position d'organes mobiles ; etc...) une solution classique consiste alors à établir un signal logique représentant l'état ouvert ou fermé de chaque interrupteur et à transmettre cet état logique à une des entrées multiples d'un multiplexeur. Ce multiplexeur est adressé séquentiellement et transmet à sa sortie, à un instant donné, l'état logique ouvert ou fermé de l'interrupteur qui est adressé à cet instant. Les informations en sortie du multiplexeur sont gérées par un contrôleur pour afficher des indications en cas de détection de dysfonctionnement par un capteur.

Si un interrupteur est ouvert, l'état logique à la sortie du multiplexeur sera par exemple l'état zéro ; s'il est fermé ce sera l'état "1" (l'inverse est possible aussi). L'interrupteur est en général ouvert au repos, fermé en cas de détection de dysfonctionnement (pour des raisons de réduction de la consommation au repos). Le multiplexeur est constitué de portes logiques adressables disposées entre les entrées et la sortie.

Ceci nécessite, en amont du multiplexeur logique, que l'interrupteur soit relié entre deux niveaux de tension, par l'intermédiaire d'une résistance de tirage, de sorte que le potentiel du point de jonction entre l'interrupteur et la résistance passe d'un niveau de potentiel à l'autre selon que l'interrupteur est ouvert ou fermé. L'un des niveaux de potentiel correspond à un état logique haut, l'autre à un état logique bas. La résistance de tirage peut être une résistance de tirage vers le haut ("pull-up resistor") ou vers le bas ("pull-down resistor").

Le point de jonction de l'interrupteur et de sa résistance de tirage est relié à un comparateur à seuil qui bascule dans un sens ou un autre selon que l'interrupteur est ouvert ou fermé, et la sortie du comparateur est reliée à une entrée du multiplexeur.

Une des difficultés de réalisation vient du manque de fiabilité de détection de l'état ouvert ou fermé de l'interrupteur en amont du multiplexeur.
Cette détection dépend en effet :
- de la valeur de la résistance de tirage,
- de la résistance propre du contact de l'interrupteur,
- du potentiel d'alimentation de l'ensemble interrupteur plus résistance de tirage,
- des variations de ces valeurs avec la température, etc...

Typiquement, dans un avion ou un hélicoptère, on peut utiliser comme niveau de potentiel bas la masse électrique générale de l'avion et comme niveau de potentiel haut l'alimentation électrique générale continue de l'avion, par exemple à 28 volts.

Mais cette alimentation n'est pas stable. Elle varie dans le temps, elle est sujette à des surtensions, à des microcoupures, à la mise en service ou non de batteries de secours, etc...

Les cahiers de charge imposent par exemple que pour une valeur nominale de 28 volts, les appareils fonctionnent correctement même si la tension descend à 16 volts ou monte à 36 volts.

La résistance de tirage dépend du type de capteur : certains nécessitent une résistance assez faible, par exemple parce que le capteur est en série avec un voyant lumineux local ; d'autres utilisent une résistance plus importante pour limiter la consommation d'énergie.

La résistance de contact de l'interrupteur varie avec son vieillissement : encrassement des contacts, usure . Or le potentiel appliqué à l'entrée du comparateur à seuil, dans l'état fermé de l'interrupteur, dépend du rapport entre la valeur de résistance de l'interrupteur proprement dit et la valeur de la résistance de tirage.

Pour ces raisons et pour d'autres encore, il n'est pas facile de régler individuellement le ou les seuils des comparateurs pour être certain que l'état logique transmis par le comparateur corresponde à un état ouvert ou fermé de l'interrupteur.

Par ailleurs, il serait souhaitable d'avoir non seulement une information sur l'état ouvert ou fermé de l'interrupteur, mais aussi une information sur le fait que cette information n'est pas fiable et ne devrait pas être prise en compte (par exemple du fait du vieillissement d'un capteur : une information de panne, impliquant la nécessité d'un remplacement, serait souhaitable). Il en serait de même d'ailleurs d'une information sur une panne de circuiterie (panne de comparateur, de multiplexeur, de connexion, etc...) entre le capteur et le contrôleur d'écran de visualisation.

De plus, il est souhaitable d'avoir un système d'acquisition le plus souple et le plus universel possible, permettant de nombreuses configurations de détection de dysfonctionnements par simple programmation de paramètres internes au système, avec un minimum de modifications des cartes électroniques pour passer d'une application à une autre.

Enfin, bien sûr, les contraintes de coût, d'encombrement et de poids sont un élément important à prendre en considération, ainsi que les possibilités de test fréquent du système, surtout pour des applications aéronautiques.

L'invention propose donc un système d'acquisition d'états logiques de multiples capteurs fonctionnant en tout ou rien, comprenant les dits capteurs, dans lequel chaque capteur (K) est relié à une entrée correspondante d'un multiplexeur analogique (MUX), la sortie du multiplexeur étant reliée à un convertisseur analogique-numérique (CAN), le multiplexeur et le convertisseur étant contrôlés par un automate de calcul adapté pour générer périodiquement et séquentiellement toutes les adresses d'entrée du multiplexeur, lire et stocker les valeurs numériques correspondantes en sortie du convertisseur pour chaque adresse, et déterminer, pour chaque adresse correspondant à un capteur, la position de la valeur numérique lue pour cette adresse par rapport à au moins une valeur de seuil respective liée à cette adresse, cette position représentant l'état logique du capteur, caractérisé en ce que chaque capteur (K) est constitué par un interrupteur relié en série avec une résistance de tirage (R) entre une masse et un potentiel d'alimentation (VA), le point de jonction de l'interrupteur et de la résistance correspondante étant relié à une entrée correspondante du multiplexeur analogique (MUX), en ce qu'une tension représentative du potentiel d'alimentation est également reliée à une entrée spécifique du multiplexeur, et en ce que des moyens sont prévus dans l'automate de calcul pour déterminer une valeur numérique de tension d'alimentation et modifier la valeur de seuil en fonction de la valeur numérique déterminée pour la tension d'alimentation. Les modes particuliers de réalisation de l'invention sont définis dans les revendications dépendantes 2 à 6.

On peut souhaiter détecter non seulement l'état ouvert ou fermé du capteur mais aussi une plage d'incertitude pour laquelle l'état doit être considéré comme indéterminé (signe de panne du capteur ou d'une partie de la chaîne de détection de l'état du capteur). Dans ce cas, la position de la valeur numérique correspondant à l'adresse d'un capteur est comparée à deux seuils, l'état indéterminé correspondant à une valeur comprise entre les deux seuils. Chacun de ces seuils peut être modifié en fonction de la valeur numérique attribuée à la tension d'alimentation par le système.

Si le système d'acquisition est utilisé pour l'affichage de dysfonctionnements sur un écran de visualisation, on n'affichera pas d'indication si l'interrupteur est en position de repos (état ouvert en général), on affichera une information d'alarme spécifique du capteur concerné en cas d'état inverse (interrupteur fermé), et une information de panne en cas d'état incertain.

Les valeurs de seuil pour un capteur déterminé et pour une valeur normale de tension d'alimentation sont stockées de préférence dans une mémoire programmable de l'automate.

Les valeurs de seuil utilisées dans la comparaison sont calculées pour chaque capteur en fonction de la valeur numérique courante déterminée par le système pour la tension d'alimentation des capteurs (en général une tension pour tous les capteurs, mais s'il y avait plusieurs tensions d'alimentation, chaque tension serait appliquée à une entrée respective du multiplexeur analogique pour être mesurée).

La variation des tensions de seuil en fonction de la tension d'alimentation peut suivre une loi quelconque, programmée à l'intérieur de l'automate, mais en général une variation proportionnelle sera suffisante.

La valeur numérique de tension d'alimentation utilisée pour modifier les seuils sera de préférence une valeur filtrée plutôt que la valeur instantanée lue au cours d'une séquence de lecture et d'analyse des tensions analogiques issues des capteurs. Ceci permet d'éviter les perturbations (donc les fausses alarmes par exemple) dues à des microcoupures d'alimentation ou à des surtensions parasites très brèves non significatives.

En pratique, l'automate de calcul comprend un séquenceur commandant en synchronisme l'adressage du multiplexeur, le convertisseur analogique-numérique, et une mémoire de stockage des valeurs fournies par le convertisseur, et un microcontrôleur programmé capable d'adresser la mémoire de stockage pour en extraire les informations stockées par le séquenceur, de traiter ces informations, et de fournir des informations résultant de ce traitement et représentant l'état de chacun des capteurs.

On notera qu'il est connu du document de brevet DE-A-3 128 811, éventuellement aussi DD-A-279 090, un système d'acquisitions de l'état de multiples capteurs, mais ce système ne s'intéresse pas à la question de la tension d'alimentation des capteurs. Il est connu également des systèmes de vérification de résistances d'isolement de lignes (EP-A-0 572 204) mais ils n'utilisent pas de multiplexeur et ne vérifient pas la tension d'alimentation des lignes.

D'autres caractéristiques et avantages de l'invention apparaîtront à la lecture de la description détaillée qui suit et qui est faite en référence aux dessins annexés dans lesquels la figure unique représente le principe général du système d'acquisition selon l'invention.

L'invention sera décrite dans le cas d'un système d'affichage des dysfonctionnements d'une installation complexe (aéronef, navire, centrale électrique, usine etc...) dans laquelle de nombreux capteurs fonctionnant en tout ou rien sont répartis aux endroits nécessitant une surveillance et sont reliés à un équipement central de mesure et d'affichage.

L'invention est cependant applicable aussi lorsque l'état des capteurs est destiné à être utilisé directement sans être affiché (utilisation pour déclencher une action de correction de dysfonctionnement par exemple).

A titre d'exemple, les capteurs fonctionnant en tout ou rien sont des détecteurs d'ouverture de porte, des interrupteurs de fin de course, des contacteurs à flotteur etc.

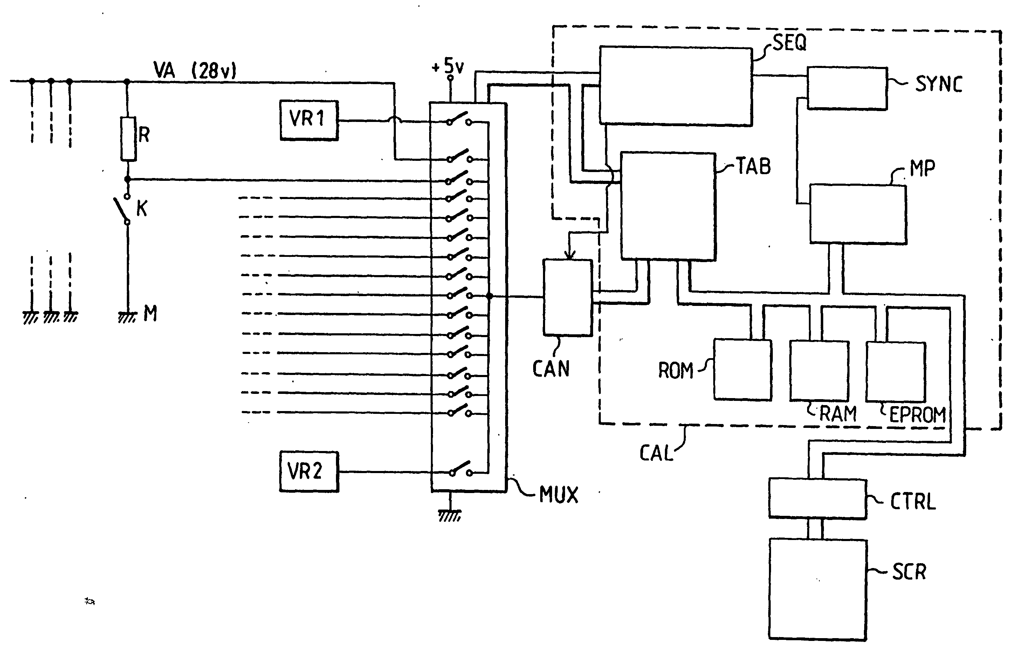

Les capteurs fonctionnant en tout ou rien sont reliés chacun à une entrée respective d'un multiplexeur analogique MUX. Par multiplexeur analogique, on entend un multiplexeur qui, lorsqu'une de ses entrées est sélectionnée, transmet sur sa sortie le niveau de tension analogique présent sur cette entrée. Un seul capteur K est représenté sur la figure 1 pour simplifier la représentation. Le multiplexeur MUX est représenté en un seul étage à seize entrées, mais il peut avoir plus de seize entrées et il peut être organisé en plusieurs étages en cascade, les sorties de plusieurs multiplexeurs d'un étage étant reliées aux entrées d'un multiplexeur d'un étage suivant.

Les capteurs sont connectés chacun en série avec une résistance de tirage respective R, l'ensemble en série étant relié entre une masse électrique générale M (en principe la même pour tous les capteurs) et un potentiel d'alimentation générale continu VA. Dans le cas d'un avion ou un hélicoptère par exemple on peut utiliser comme potentiel d'alimentation le câble d'alimentation à 28 volts continu qui dessert les différentes parties de l'avion ou l'hélicoptère.

La résistance R est dite résistance de tirage car, lorsque l'interrupteur K est ouvert, elle tire le point de jonction de l'interrupteur et de la résistance vers le potentiel auquel elle est connectée par ailleurs.

Si la résistance de tirage est connectée au potentiel d'alimentation VA supposé positif, c'est une résistance de tirage vers le haut ("pull-up résistor") ; si elle est connectée à la masse M, c'est une résistance de tirage vers le bas ("pull-down resistor").

L'interrupteur K est de préférence ouvert au repos, fermé en cas de dysfonctionnement, mais on comprendra que l'inverse est également possible.

Le potentiel d'alimentation VA est relié à une entrée spécifique du multiplexeur analogique de sorte qu'on pourra transmettre ce potentiel à la sortie du multiplexeur en vue de le mesurer. S'il y a plusieurs potentiels d'alimentation différents pour différents groupes de capteurs on prévoira une entrée spécifique pour chacun de ces potentiels. Si on le souhaite on pourra appliquer à l'entrée du multiplexeur, plutôt que la tension d'alimentation VA elle-même, une tension représentative de VA, telle qu'une fraction de cette tension obtenue par l'intermédiaire d'un pont diviseur.

Les autres entrées du multiplexeur sont reliées chacune à un capteur respectif, c'est-à-dire plus précisément au point de jonction de l'interrupteur et de la résistance de tirage correspondant à ce capteur. Les résistances de tirage peuvent être localisées chacune à l'endroit d'un capteur ou être regroupées dans l'équipement central qui traite les informations issues des capteurs et qui affiche les alarmes.

Cependant, pour des raisons qu'on expliquera plus loin, on peut prévoir que deux entrées du multiplexeur sont réservées pour recevoir chacune un potentiel de référence VR1 et VR2, précis et indépendants des variations de la tension d'alimentation, de la température, etc.

Le potentiel VR1 est un potentiel bas pouvant représenter une extrémité d'une plage de conversion analogique-numérique ; le potentiel VR2 est un potentiel haut représentant une autre extrémité de cette plage.

La sortie du multiplexeur MUX est reliée à l'entrée d'un convertisseur analogique-numérique CAN, actionné en synchronisme avec le multiplexeur pour fournir périodiquement une série de valeurs numériques correspondant aux tensions analogiques présentes sur chacune des entrées du multiplexeur. Les adresses d'entrée du multiplexeur, correspondant chacune à un capteur K respectif ou à une des tensions VA, VR1, VR2, sont donc explorées successivement et l'exploration est renouvelée périodiquement. La périodicité peut être par exemple de 30 millisecondes. Un amplificateur à gain contrôlé peut être inséré entre la sortie du multiplexeur et l'entrée du convertisseur.

Multiplexeur et convertisseur sont commandés par un automate de calcul programmable dont la fonction est d'obtenir une information sur l'état de chacun des capteurs à partir des valeurs numériques fournies par le convertisseur et à partir d'autres valeurs numériques (des valeurs de seuil) enregistrées dans une mémoire programmable. L'automate de calcul peut être programmable non seulement pour stocker des valeurs de seuil désirées mais aussi dans certains cas pour déterminer les calculs à faire.

Le schéma synoptique de l'automate de calcul, c'est-à-dire des circuits de traitements des informations numériques issues du convertisseur analogique-numérique CAN, est visible sur la partie droite de la figure, dans le cadre pointillé référencé CAL.

L'automate de calcul peut être composé de deux parties principales :
- un séquenceur de conversion proprement dit, SEQ, qui contrôle le multiplexeur MUX et le convertisseur CAN et qui stocke dans une mémoire numérique volatile (registres) TAB toutes les valeurs numériques de tensions analogiques présentes sur les entrées du multiplexeur, chacune à une adresse qui correspond à une adresse d'entrée du multiplexeur, donc à une adresse correspondante de capteur (ou, pour les entrées de multiplexeur non reliées à un capteur, une adresse correspondant à une des tensions d'alimentation VA, VR1, ou VR2) ;
- et un microcontrôleur, c'est-à-dire un microprocesseur MP avec ses mémoires de travail volatiles (RAM), ses mémoires de données non volatiles programmables (EPROM) et ses mémoires mortes de programmes (ROM ou EPROM) ; ce microcontrôleur utilise la mémoire TAB remplie par le séquenceur comme périphérique et il est capable par conséquent de lire et traiter ensuite les valeurs numériques stockées dans cette mémoire TAB.

Un circuit de synchronisation commun SYNC pilote le microprocesseur et le séquenceur SEQ pour les faire travailler en correspondance l'un avec l'autre.

Le microprocesseur MP a également pour organe périphérique un contrôleur d'écran de visualisation (CTRL) qui commande l'affichage des informations désirées sur un écran SCR. Les informations désirées peuvent être des informations détaillées sur les capteurs, ou bien, dans l'application aéronautique envisagée ici, seulement des informations sur l'état des capteurs qui représentent un dysfonctionnement détecté (alarme ou panne).

Le fonctionnement du système est le suivant.

Chaque capteur K fournit à l'entrée du multiplexeur une tension analogique dépendant de l'état ouvert ou fermé du capteur ; et dans l'état fermé, cette tension dépend de la valeur de la résistance de tirage, de la tension d'alimentation, de l'état plus ou moins défectueux du contact de l'interrupteur, et de l'état plus ou moins défectueux de la ligne qui le relie au multiplexeur.

Au cours d'une séquence d'exploration de toutes les adresses d'entrée du multiplexeur, le séquenceur SEQ stocke dans la mémoire TAB qui lui est associée, toutes les valeurs numériques représentant les tensions analogiques d'entrée du multiplexeur, y compris celles qui représentent le potentiel d'alimentation VA et les potentiels de référence VR1 et VR2.

Pendant que le séquenceur commence une deuxième séquence d'exploration et de stockage, le microcontrôleur traite les valeurs numériques stockées au cours de la première séquence. La mémoire TAB est donc organisée de manière à fonctionner en mode "double page" : une page réservée à l'enregistrement pendant que l'autre est réservée à la lecture, les fonctions des pages étant inversées à chaque nouvelle séquence.

Les valeurs numériques correspondant aux potentiels de référence bas VR1 et haut VR2 sont comparées à des valeurs théoriques et, s'il y a un écart, cet écart représente une erreur de conversion. Cette erreur est utilisée pour corriger ensuite toutes les valeurs numériques stockées par le convertisseur analogique-numérique. La correction est par exemple une fonction d'interpolation linéaire entre l'erreur sur la valeur basse VR1 et l'erreur sur la valeur haute VR2. Les programmes de correction sont stockés dans les mémoires mortes du microcontrôleur.

La valeur numérique correspondant à la tension d'alimentation VA, éventuellement corrigée de l'erreur de conversion, est traitée par filtrage (essentiellement un filtrage anti-repliement), en fonction des valeurs mesurées dans les séquences précédentes, pour lisser les variations de VA et éliminer les valeurs aberrantes dues à des microcoupures ou surtensions parasites. La valeur numérique ainsi filtrée est stockée à une adresse spécifique de la mémoire de travail du microcontrôleur, et elle sert ensuite de valeur représentative de la tension VA pour le traitement des valeurs de tension numérisées issues des capteurs au cours de la séquence en cours d'analyse.

Plus précisément, la valeur numérique de VA est utilisée pour calculer des nouvelles valeurs de seuil (seuil haut et seuil bas) correspondant à chaque capteur, à partir d'une table de valeurs de seuils théoriques enregistrée (pour une application donnée) dans une mémoire non-volatile (de préférence dans une mémoire reprogrammable EPROM).

Les valeurs de seuil recalculées sont stockées par le microcontrôleur dans sa mémoire de travail. Elles serviront pour la séquence d'analyse en cours et seront modifiées si nécessaire dans les séquences suivantes.

Le calcul de seuil modifié se fait selon un programme de calcul enregistré dans la mémoire morte de programme du microcontrôleur. La solution la plus simple consiste à rendre les seuils proportionnels à la tension d'alimentation VA, c'est-à-dire à multiplier la tension de seuil nominale enregistrée par le rapport entre la valeur de tension d'alimentation déterminée ci-dessus et la valeur nominale de cette tension d'alimentation. D'autres règles de calcul plus sophistiquées seraient bien entendu possibles (variations linéaires, variations logarithmiques, etc.).
Le microcontrôleur compare chaque valeur numérique d'entrée, correspondant à une adresse de capteur déterminée, au seuil haut et au seuil bas recalculé pour cette adresse.

Selon que la valeur est au-dessous du seuil bas, au-dessus du seuil haut, ou entre les deux seuils, il fournit alors une indication correspondant à un état fermé (en supposant que l'interrupteur est connecté à la masse avec une résistance de tirage vers le haut comme à la figure 1), un état ouvert, ou un état indéterminé représentant une panne du capteur ou du système d'acquisition.

Cette information, pour chaque capteur, est une information brute, fournie telle quelle à la sortie du microcontrôleur. Dans le cas d'un système d'affichage de pannes, le programme de contrôle (celui du microcontrôleur, ou éventuellement celui d'un microprocesseur de plus haut niveau qui recevrait les informations brutes du microcontrôleur) affiche une indication explicite pour l'utilisateur sur l'écran SCR.

Le programme peut prévoir toutes sortes de traitements plus sophistiqués des informations reçues : mémorisation et affichage en permanence de toutes les détections correspondant à des alarmes et à des pannes, suppression de cet affichage par action manuelle de l'utilisateur , affichage d'informations corrélant les indications de plusieurs capteurs, etc. Ceci dépend bien entendu des applications envisagées.

L'invention a été décrite en supposant que les interrupteurs fonctionnant en tout ou rien sont des contacteurs mécaniques. On comprendra qu'elle est aisément transposable au cas où les capteurs sont des cellules photoélectriques fonctionnant également en tout ou rien.

## Revendications

1. Système d'acquisition d'états logiques de multiples capteurs fonctionnant en tout ou rien, comprenant les dits capteurs, dans lequel chaque capteur (K) est relié à une entrée correspondante d'un multiplexeur analogique (MUX), la sortie du multiplexeur étant reliée à un convertisseur analogique-numérique (CAN), le multiplexeur et le convertisseur étant contrôlés par un automate de calcul (CAL) adapte pour générer périodiquement et séquentiellement toutes les adresses d'entrée du multiplexeur, lire et stocker les valeurs numériques correspondantes en sortie du convertisseur pour chaque adresse, et déterminer, pour chaque adresse correspondant à un capteur, la position de la valeur numérique lue pour cette adresse par rapport à au moins une valeur de seuil respective liée à cette adresse, cette position représentant l'état logique du capteur, **caractérisé en ce que** chaque capteur (K) est constitué par un interrupteur relié en série avec une résistance de tirage (R) entre une masse (M) et un potentiel d'alimentation (VA), le point de jonction de l'interrupteur et de la résistance correspondante étant relié à une entrée correspondante du multiplexeur analogique (MUX), **en ce qu'**une tension représentative du potentiel d'alimentation est également reliée à une entrée spécifique du multiplexeur, et **en ce que** des moyens sont prévus dans l'automate de calcul pour déterminer une valeur numérique de tension d'alimentation et modifier la valeur de seuil en fonction de la valeur numérique déterminée pour la tension d'alimentation.

2. Système d'acquisition selon la revendication 1, **caractérisé en ce que** la position de la valeur numérique lue pour une adresse de capteur est déterminée par rapport à un seuil bas et un seuil haut pour fournir une indication d'état fermé, état ouvert, et état indéterminé du capteur.

3. Système d'acquisition selon l'une des revendications 1 et 2, **caractérisé en ce que** le calcul de la valeur de seuil modifiée est un calcul proportionnel à partir d'une valeur de seuil nominale enregistrée pour un capteur déterminé et du rapport entre la valeur déterminée pour la tension d'alimentation et une valeur nominale de tension d'alimentation.

4. Système selon l'une des revendications 1 à 3, **caractérisé en ce que** la détermination de la valeur de tension d'alimentation se fait par filtrage à partir d'une valeur numérique instantanée lue au cours d'une séquence d'exploration du multiplexeur et des valeurs déterminées précédemment, pour lisser les variations de tension d'alimentation et éliminer les valeurs aberrantes.

5. Système selon l'une des revendications 1 à 4, **caractérisé en ce qu'**un potentiel de référence bas VR1 et un potentiel de référence haut VR2 sont appliqués chacun à une entrée respective du multiplexeur, **en ce que** l'automate de calcul détermine une erreur de conversion par comparaison entre une valeur numérique en sortie du convertisseur pour chacune de ces entrées et une valeur théorique correspondant à ces potentiels, et **en ce que** l'automate calcule à partir de cette erreur une correction à effectuer pour chacune des valeurs numériques fournies par le convertisseur avant de déterminer la position de ces valeurs numériques par rapport aux seuils.

6. Système selon l'une des revendications 1 à 5, **caractérisé en ce que** l'automate de calcul comprend un séquenceur (SEQ) commandant en synchronisme l'adressage du multiplexeur (MUX), le convertisseur analogique-numérique (CAN) et une mémoire (TAB) de stockage des valeurs fournies par le convertisseur, et un microcontrôleur programmé (MP, RAM, ROM, EPROM) capable d'adresser la mémoire de stockage (TAB) pour en extraire les informations stockées par le séquenceur en vue de leur traitement, et apte à fournir les informations résultant de ce traitement et représentant l'état de chacun des capteurs.

## Patentansprüche

1. System zum Erfassen logischer Zustände einer Vielzahl von Fühlern, die nach dem Alles-oder-Nichts-Prinzip funktionieren, das die Fühler umfasst, bei dem jeder Fühler (K) an einen entsprechenden Eingang eines analogen Multiplexers (MUX) angeschlossen ist, wobei der Ausgang des Multiplexers an einen Analog-Digital-Wandler (CAN) angeschlossen ist, wobei der Multiplexer und der Wandler von einem Rechenautomaten (CAL) gesteuert werden, der periodisch und sequenziell alle Eingangsadressen des Multiplexers erzeugen, die entsprechenden Zahlenwerte am Ausgang des Wandlers für jede Adresse lesen und speichern und für jede Adresse, die einem Fühler entspricht, die Position des Zahlenwerts, die für diese Adresse im Vergleich mit zumindest einem jeweiligen Schwellenwert, der mit dieser Adresse verbunden ist, bestimmen kann, wobei diese Position den logischen Zustand des Fühlers darstellt, **dadurch gekennzeichnet, dass** jeder Fühler (K) aus einem Schalter besteht, der in Serie mit einem Ziehwiderstand (R) zwischen einer Masse (M) und einem Versorgungspotenzial (VA) verbunden ist, wobei der Verbindungspunkt des Schalters und des entsprechenden Widerstands an einen entsprechenden Eingang des analogen Multiplexers (MUX) angeschlossen sind, dass eine Spannung, die für das Versorgungspotenzial repräsentativ ist, ebenfalls an einen spezifischen Eingang des Multiplexers angeschlossen ist, und dass Mittel in dem Rechenautomaten vorgesehen sind, um einen Zahlenwert der Versorgungsspannung zu bestimmen und den Schwellenwert in Abhängigkeit von dem für die Versorgungsspannung bestimmten Zahlenwert zu ändern.

2. Erfassungssystem nach Anspruch 1, **dadurch gekennzeichnet, dass** die Position des für eine Fühleradresse gelesenen Zahlenwerts im Vergleich zu einem unteren und einem oberen Schwellenwert bestimmt wird, um eine Anzeige für geschlossenen Zustand, offenen Zustand und unbestimmten Zustand des Fühlers zu liefern.

3. Erfassungssystem nach einem der Ansprüche 1 und 2, **dadurch gekennzeichnet, dass** die Berechnung des geänderten Schwellenwerts eine Proportionalberechnung ausgehend von einem Nennschwellenwert ist, der für einen bestimmten Fühler aufgezeichnet ist, und dem Verhältnis zwischen dem für die Versorgungsspannung bestimmten Wert und einem Versorgungsspannungsnennwert ist.

4. System nach einem der Ansprüche 1 bis 3, **dadurch gekennzeichnet, dass** das Bestimmen des Versorgungsspannungswerts durch Filtern ausgehend von einem Momentanzahlenwert, der im Laufe einer Erforschungssequenz des Multiplexers gelesen wird, und vorausbestimmten Werten, um die Versorgungsspannungsvariationen zu glätten und abweichende Werte zu eliminieren, erfolgt.

5. System nach einem der Ansprüche 1 bis 4, **dadurch gekennzeichnet, dass** ein niedriges Referenzpotenzial VR1 und ein hohes Referenzpotenzial VR2 jeweils an einen jeweiligen Eingang des Multiplexers angelegt werden, und dass der Rechenautomat einen Umwandlungsfehler durch Vergleichen zwischen einem Zahlenwert am Ausgang des Wandlers für jeden dieser Eingänge und einem theoretischen Wert bestimmt, der diesen Potenzialen entspricht, und dass der Rechenautomat ausgehend von diesem Fehler eine Korrektur berechnet, die für jeden der von dem Wandler gelieferten Zahlenwerte durchzuführen ist, bevor die Position dieser Zahlenwerte im Vergleich zu den Schwellenwerten bestimmt wird.

6. System nach einem der Ansprüche 1 bis 5, **dadurch gekennzeichnet, dass** der Rechenautomat einen Sequenzierer (SEQ) umfasst, der synchron das Adressieren des Multiplexers (MUX), den Analog-Digital-Wandler (CAN) und einen Speicher (TAB) der von dem Wandler gelieferten Werte und einen programmierten Mikrocontroller (MP, RAM, ROM, EPROM) steuert, der den Lagerspeicher (TAB) adressieren kann, um daraus die Informationen zu extrahieren, die vom Sequenzierer gespeichert werden, um verarbeitet zu werden, und die Informationen liefern kann, die sich aus dieser Verarbeitung ergeben und den Zustand jedes der Fühler darstellen.

## Claims

1. System for acquisition of logic states from multiple sensors operating in all-or-nothing mode, comprising said sensors, in which each sensor (K) is linked to a corresponding input of an analogue multiplexer (MUX), the output of the multiplexer being linked to an analogue-digital converter (CAN), the multiplexer and the converter being driven by a calculating logic unit (CAL) which is adapted for generating periodically and sequentially all the input addresses of the multiplexer, for reading and storing the corresponding digital values at the output of the converter for each address, and for determining, for each address corresponding to a sensor, the position of the digital value read for this address with respect to at least one respective threshold value relating to this address, this position representing the logic state of the sensor, **characterized in that** each sensor (K) consists of a switch linked in series with a pulling resistor (R) between earth (M) and a power-supply potential (VA), the junction point of the switch and of the corresponding resistor being linked to a corresponding input of an analogue multiplexer (MUX), **in that** a voltage representative of the power-supply potential is also linked to a specific input of the multiplexer, and **in that** means are provided in the calculating logic unit for determining a digital value of power-supply voltage and for altering the threshold value as a function of the digital value determined for the power-supply voltage.

2. Acquisition system according to Claim 1, **characterized in that** the position of the digital value read for a sensor address is determined with respect to a low threshold and a high threshold in order to supply an indication of a closed state, open state and indeterminate state of the sensor.

3. Acquisition system according to either of Claims 1 and 2, **characterized in that** the calculation of the altered threshold value is a proportional calculation on the basis of a nominal threshold value recorded for a given sensor and of the ratio between the value determined for the power-supply voltage and a nominal value of power-supply voltage.

4. System according to one of Claims 1 to 3, **characterized in that** the determining of the value of power-supply voltage is done by filtering on the basis of an instantaneous digital value read in the course of a sequence of scanning the multiplexer and of the previously determined values, in order to smooth the variations in power-supply voltage and to eliminate rogue values.

5. System according to one of Claims 1 to 4, **characterized in that** a low reference potential VR1 and a high reference potential VR2 are each applied to a respective input of the multiplexer, **in that** the calculating logic unit determines a conversion error by comparison between a digital value at the output of the converter for each of these inputs and a theoretical value corresponding to these potentials, and **in that** the logic unit, on the basis of this error, calculates a correction to be applied for each of the digital values supplied by the converter before determining the position of these digital values with respect to the thresholds.

6. System according to one of Claims 1 to 5, **characterized in that** the calculating logic unit comprises a sequencer (SEQ) driving, in synchronism, the addressing of the multiplexer (MUX), the analogue-digital converter (CAN), and a memory (TAB) for storing the values supplied by the converter, and a programmed microcontroller (MP, RAM, ROM, EPROM) capable of addressing the storage memory (TAB) in order to extract from it the information stored by the sequencer with a view to processing it, and able to supply the information resulting from this processing and representing the state of each of the sensors.
